Europäisches Patentamt

European Patent Office

Office européen des brevets

(11) Veröffentlichungsnummer: **0 092 596**
**B1**

(12) **EUROPÄISCHE PATENTSCHRIFT**

(45) Veröffentlichungstag der Patentschrift:
27.08.86

(21) Anmeldenummer: **82103571.4**

(22) Anmeldetag: **27.04.82**

(51) Int. Cl.⁴: **B 60 P 7/08,** F 16 G 11/12,
B 65 B 13/28

(54) Werkzeug zum Verzurren von Spanndrähten.

(43) Veröffentlichungstag der Anmeldung:
**02.11.83 Patentblatt 83/44**

(45) Bekanntmachung des Hinweises auf die Patenterteilung:
**27.08.86 Patentblatt 86/35**

(84) Benannte Vertragsstaaten:
**DE FR**

(56) Entgegenhaltungen:
**EP - A - 0 023 478**
**DE - A - 2 610 744**
**DE - C - 401 404**
**DE - C - 871 388**
**US - A - 2 111 115**
**US - A - 2 327 097**
**US - A - 2 330 629**

(73) Patentinhaber: **DEERE & COMPANY, 1 John Deere Road, Moline Illinois 61265 (US)**

(72) Erfinder: **Schilling, Anton, Fichtestrasse 3, D-6831 Brühl (DE)**
Erfinder: **Wachtel, Werner, Edingerstrasse 24, D-6900 Heidelberg (DE)**

(74) Vertreter: **Feldmann, Bernhard et al, DEERE & COMPANY European Office, Patent Department Steubenstrasse 36-42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein transportables Werkzeug zum Verzurren von Spanndrähten oder dgl., die z.B. der Befestigung oder Verspannung von Transportgut dienen, mit einem von einem Gehäuse umgebenen Zahnradsatz, der einen im wesentlichen zylinderförmigen Einsatz über dessen am Aussenmantel radial umlaufenden Zahnkranz antreibt, wobei der Einsatz einen mit einer Öffnung im Gehäuse korrespondierenden, sich über die ganze Höhe des Einsatzes erstreckenden Schlitz aufweist, und wobei Öffnung und Schlitz parallellaufen zur Achse der Zahnräder.

Die vorgenannten Elemente sind bekannt aus dem Dokument DE-C 401 404. Dieses beschreibt eine stationär angeordnete Maschine zum Bündeln von Gegenständen mittels Draht, wobei mit einer manuell auszuführenden Hebelbewegung zwei Drahtenden mit etwa zwei bis drei Verdrillungen miteinander verbunden und anschliessend durchschnitten werden. Die Maschine ist stationär eingerichtet und eignet sich daher nicht zum Einsatz vor Ort. Insbesondere ist sie nicht zum Verspannen von Drähten (unter Längenverkürzung) geeignet, wozu zahlreiche Umdrehungen bzw. Verdrillungen in möglichst kurzer Zeit bewerkstelligt werden müssten.

Bisher wurde beim Verzurren von Spanndrähten bzw. Spannbändern oder dgl. so vorgegangen, dass man das aus mehreren Drähten oder dgl. bestehende Bündel mittels eines durchgesteckten Eisenstabes so lange verdrillt bzw. verzurrt hat, bis die nötige Verkürzung bzw. Spannung erreicht wurde. Je nach Transportgut, z.B. Paletten mit Baustoffen oder zu transportierende Fahrzeuge oder Fahrzeugteile, war nicht immer der erforderliche Platz zum Durchstecken und Verdrehen eines solchen Eisenstabes vorhanden. Im übrigen erforderte ein solches manuelles Verzurren unnötig viel Kraft- und Zeitaufwand.

Der Erfindung liegt nun die Aufgabe zugrunde, ein solches Verzurren bzw. Verspannen eines Drahtbündels oder dgl. unter Verwendung eines nichtstationären, motorbetriebenen, gut handhabbaren Werkzeuges zu erreichen.

Als Vorbild mochte von der Werkzeugseite her – wenn auch mit ganz anderer Funktion – ein auf dem Markt erhältlicher Pressluft-Flachschrauber dienen. Es handelt sich um ein längliches, handbetätigbares Werkzeug, in das von hinten der Pressluftschlauch eintritt und in dessen länglichem Griff der eigentliche Pressluftmotor sowie die benötigten Ventile usw. integriert sind. In einer winkligen Stellung zum Griff des Werkzeuges befindet sich der Einschalt- und Steuerhebel, der durch mehr oder weniger Druck zum Werkzeugkörper bzw. Griff hin über aus dem Werkzeuggehäuse herausragende Stifte auf entsprechende Ventile usw. einwirkt. An den eigentlichen Werkzeugkörper schliesst sich nach vorne zur Betätigungsseite hin ein flaches vorne offenes Gehäuse an, dessen Treibrad ggf. über einen Winkeltrieb vom Ritzel des Pressluftmotors angetrieben wird. Das Treibrad treibt über zwei Zwischenräder im Falle des bekannten offenen Flachschraubers einen Sechskant-Einsatz an, der vermöge seines Schlitzes z.B. über ein Rohr geschoben und seitwärts auf eine Rohrsechskantmutter aufgesetzt werden kann, die je nach Betätigung des Einschalt- und Steuerhebels in eine mitrotierende Bewegung im Sinne des Öffnens oder Schliessens der Sechskantschraube versetzt werden kann.

Das vorgenannte bekannte Werkzeug erfüllt bezüglich Grösse, Drehmoment und Steuerung der rotierenden Bewegung des Einsatzes die Erfordernisse für ein Werkzeug zum Verzurren von Spanndrähten.

Der Schlitz des Einsatzes ist so gestaltet, dass das Werkzeug über das entsprechende im Vergleich zur Sechskantmutter der Rohrverschraubung einen deutlich geringeren Umfang aufweisende Rohr aufgeschoben werden kann. Der entsprechende Schlitz ist jedoch nicht verschliessbar. Der auf eine bestimmte Mutterngrösse abgestimmte Einsatz ist als solcher zum Verzurren von Drähten ungeeignet und ausserdem ohne Öffnen des vorderen Gehäuseteils nicht austauschbar.

Wichtiger Bestandteil der der Erfindung zugrundeliegenden Aufgabe ist eine solche Gestaltung des Werkzeuges und insbesondere seines Einsatzes, dass sich derselbe leicht über in Frage kommende Spanndrahtbündel oder dgl. schieben lässt und ein unerwünschtes Austreten einzelner Drähte aus dem Einsatz bzw. dem Werkzeug während des Rotierens bzw. Verzurrens unterbleibt, da dies sowohl eine Beschädigung des Werkzeuges verursachen als auch unter Sicherheitsgesichtspunkten sehr unerwünscht sein würde.

Vorgenannte Aufgabe wird nun – ausgehend von den eingangs genannten bekannten Werkzeugelementen – gemäss der Erfindung dadurch gelöst, dass der Zahnkranz des Einsatzes von einem im Werkzeuggehäuse integrierten Motor antreibbar ist, und dass der Einsatz aus mindestens zwei Teilen besteht, wobei eine Mitnehmerbuchse mit Schlitz konzentrisch von einem Hohlzylinder mit Aussenzahnkranz und Mantelschlitz umfasst ist, der von Zwischenrädern angetriebene Hohlzylinder die Mitnehmerbuchse mittels Verrastung mitnimmt, und die Verrastungselemente radial so verteilt sind, dass die Mitnahme erst erfolgt, wenn sich Hohlzylinder und Mitnehmerbuchse in bezug auf die korrespondierenden Schlitze um mehr als die Schlitzbreite gegeneinander verdreht haben.

Das bedeutet, dass der Schlitz sozusagen automatisch geschlossen wird, bevor auf die Spanndrähte Kräfte ausgeübt werden. Insofern handelt es sich also hier um eine besonders sichere und bequem handhabbare Ausführungsform.

Normalerweise handelt es sich bei der Befestigung bzw. Sicherung von Transportgut um Abspannungen mit jeweils mehreren Drähten. Es kann sich jedoch auch z.B. um ein einzelnes Blechband handeln. In jedem Fall muss die Abspannung bzw. das Befestigungselement unter Verdrillen verkürzbar sein, was hier kurz mit Verzurren bezeichnet wird. Das setzt im allgemeinen auch eine gewisse Formsteifigkeit des Materials voraus, jedoch sind derartige Drähte bzw. Elemente usw. bekannt und auf dem Markt erhältlich.

Von Vorteil ist es, wenn die Tiefe des Schlitzes bekanntermassen vom Aussenmantel des Einsatzes bis über die Mittelachse reicht, und zwar derart, dass das Spinndrahtbündel in eine Lage etwa konzentrisch zur Drehachse einbringbar ist. Aus je mehr Einzeldrähten das Spanndrahtbündel besteht, um so tiefer sollte der Schlitz bemessen sein. Die Breite des Schlitzes sollte etwa dem Doppelten des zu verwendenden Spanndrahtdurchmessers entsprechen. Daraus ergibt sich etwa eine Schlitzbreite von vorteilhafter Weise 5 bis 10 mm und eine Schlitztiefe gemäss 60 bis 90% des Durchmessers des Einsatzes, bevorzugt 80 bis 90% des Durchmessers des Einsatzes, was bei den üblichen Dimensionierungen eine Schlitztiefe von etwa 25 bis 35 mm bedeutet.

Gemäss einer weiterverfeinerten Ausführungsform der Erfindung lässt sich ein leicht auswechselbarer Einsatz dadurch gestalten, dass die Mitnehmerbuchse an ihrem Fuss und Kopf je einen Flansch aufweist zur axialen Führung des Hohlzylinders sowie zur Befestigung des kompletten Einsatzes im Gehäuse, wobei wenigstens einer der Flansche lösbar an der Mitnehmerbuchse nach Durchstecken derselben durch die Bohrung des Gehäuses und den darin verbleibenden Hohlzylinder befestigbar, insbesondere aufschraubbar, ist.

Ein solcher Einsatz besteht dann aus drei Teilen, nämlich der Mitnehmerbuchse mit angeformtem Flansch, einem aufschraubbaren Flansch sowie dem Hohlzylinder mit Aussenzahnkranz, der axial von den beiden Flanschen geführt sein kann und radial die soweit zylindrisch geformte Mitnehmerbuchse umgibt.

Dabei ist der Mantelschlitz des Hohlzylinders mindestens so weit wie der der Mitnehmerbuchse.

Bevorzugt wird der Hohlzylinder mit Aussenzahnkranz über zwei in derselben Ebene liegende Zwischenräder angetrieben, die jeweils mit dem Treibrad und mit dem Zahnkranz des Hohlzylinders in Eingriff stehen.

Bei richtiger Wahl von Grösse und Abstand der beiden Zwischenräder ist trotz der Unterbrechung des Zahnkranzes des Hohlzylinders eine tote antriebslose Stellung ausgeschlossen.

Weitere vorteilhafte Ausführungsformen der Erfindung sind in Unteransprüchen gekennzeichnet.

Die Erfindung wird im folgenden anhand eines Ausführungsbeispieles näher erläutert, aus dem sich weitere Merkmale und Vorteile der Erfindung entnehmen lassen. In der zugehörigen Zeichnung zeigen

Fig. 1 eine Explosionszeichnung in perspektivischer Sicht des im wesentlichen dreiteilig ausgebildeten Einsatzes einschliesslich dem vorderen Teil des Werkzeuges;

Fig. 2 einen Schnitt durch den zwei- oder dreiteilig ausgebildeten Einsatz senkrecht zur Drehachse;

Fig. 3 einen Schnitt durch den vorderen Teil des Werkzeuges einschliesslich des im wesentlichen dreiteiligen Einsatzes, in Richtung der Drehachse.

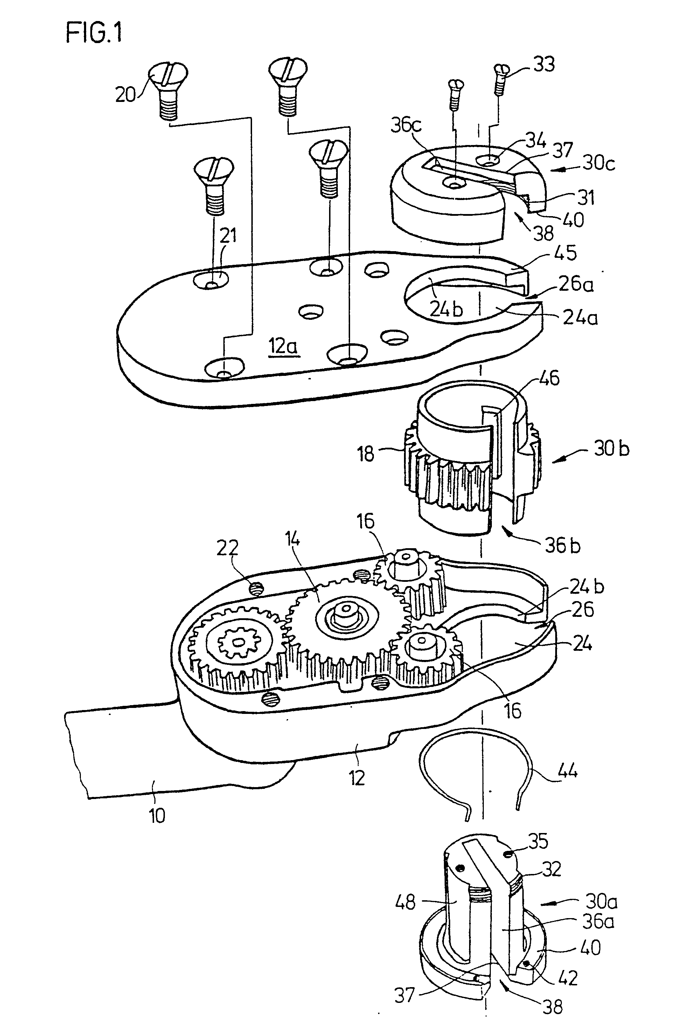

In Fig. 1 ist mit 10 das vordere Ende des länglichen Werkzeuges gezeigt, der eigentliche Handgriff liegt links ausserhalb der Zeichnung. Im rechten Teil schliesst sich das vordere flache Gehäuseteil 12, 12a an, das den mit dem eigentlichen Werkzeug-Einsatz direkt in Verbindung stehenden Zahnradsatz zeigt. Dieser besteht im wesentlichen aus dem Treibrad 14, das über zwei Zwischenräder 16 den Aussenzahnkranz 18 des Verzurr-Einsatzes antreibt. Das Treibrad 14 selbst ist über einen nicht im einzelnen gezeigten Kegeltrieb von der im Werkzeug 10 längs verlaufenden Welle angetrieben. Die (nicht gezeigte) Welle ist ihrerseits von dem zweckmässigerweise in das Werkzeug bzw. dessen Griff eingearbeiteten Motor, z.B. einen Druckluftmotor angetrieben. Das Gehäuse 12 ist abgedeckt durch die Gehäuseabdeckplatte 12a, welche z.B. mit vier Schrauben 20 und mit diesen korrespondierenden Öffnungen 21 sowie Gewindesacklöchern 22 befestigt ist. Das Gehäuse 12 einschliesslich Gehäuseabdeckplatte 12a besitzt in seinem äusseren Bereich eine Bohrung 24, 24a zur Aufnahme des Verzurr-Einsatzes sowie einen vorderen Schlitz 26 bzw. 26a, um die Befestigungselemente bzw. Spanndrähte 28 aufnehmen zu können.

Der eigentliche Verzurr-Einsatz besteht im Falle des gezeigten Ausführungsbeispieles aus im wesentlichen drei Teilen, nämlich der Mitnehmerbuchse 30a, dem Hohlzylinder 30b mit Zahnradkranz 18 und dem oberen Flansch 30c, der mittels Gewinde 31 auf das entsprechende Gewinde 32 der Mitnehmerbuchse 30a aufschraubbar ist. Der untere Flansch ist im Falle des gezeigten Ausführungsbeispieles einstückig an die Mitnehmerbuchse 30a angeformt. Der obere Flansch 30c kann durch Schrauben 33 mit zugehörigen Bohrungen 34 zusätzlich verankert werden in Gewindesacklöchern 35 der Mitnehmerbuchse 30a. Alle drei Einsatzteile 30a, 30b, 30c weisen korrespondierende Schlitze 36a, 36b und 36c auf. Dabei empfiehlt es sich, den Schlitz 36a in der Mitnehmerbuchse 30a in bezug auf seine Tiefe leicht konisch erweitert zur Öffnung hin auszubilden, um eine leichte Entnahme des Drahtbundes oder dergleichen sicherzustellen. Entsprechend ist selbstverständlich Schlitz 36c zu gestalten. Ein typisches Mass für übliche Spanndrähte ist eine Breite von ca. 6 mm am inneren Ende des Schlitzes und eine Öffnungsbreite von ca. 8 mm. Schliesslich weist der Schlitz am axialen Austritt bevorzugt eine Abrundung 37 von etwa 2 mm auf und zur Aufschiebeseite hin, also radial, eine Aufweitung 38.

Weiterhin gehört zum Verzurr-Einsatz gemäss dem gezeigten Ausführungsbeispiel noch ein in einem Flanschbund 40 mittels Bohrungen 42 fixierter federnder Distanzdrahtring 44.

Dieser Distanzring 44 sorgt für eine gewisse Reibung zwischen dem entgegengesetzten Flanschbund 40 und der Gehäusewand 49, was im Hinblick auf die zuverlässige Öffnung und Schliessung des Schlitzes 36 von Bedeutung ist.

Der mehrteilige Einsatz 30 kann ohne Öffnung des Gehäuses 12 ausgewechselt werden. Dazu werden die Schrauben 33 entfernt und der obere Flansch 30c von der Mitnehmerbuchse 30a abgeschraubt, wonach sich diese nach unten aus dem Gehäuse entfernen lässt. Der Hohlzylinder 30b verbleibt dabei im Gehäuse 12. Zur Anwendung des Werkzeugs auf verschiedene Befestigungselemente bzw. Drahtbündel und Drahtbänder genügt es, verschiedene Mitnehmerbuchsen 30a mit bezüglich Tiefe und Breite verschieden ausgebildeten Schlitzen 36a sowie dazu passenden oberen Flanschen 30c bereit zu halten.

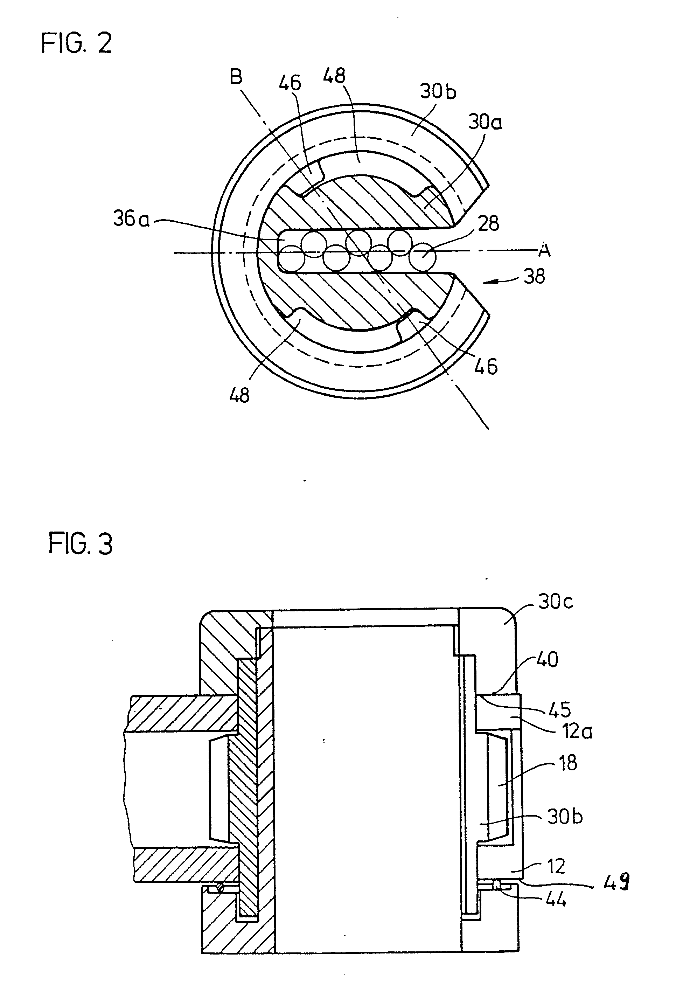

Im folgenden sei unter Zuhilfenahme von Fig. 2 die Verrastung der Teile des Einsatzes 30 einschliesslich der wichtigen Verschliessung des Schlitzes 36 näher erläutert.

Fig. 2 zeigt als Schnitt senkrecht zur Drehachse den Zustand des Werkzeugs bzw. seines Einsatzes 30 nach Aufnahme eines aus sieben Einzeldrähten bestehenden Spanndrahtbündels. Zur Verrastung von Mitnehmerbuchse 30a und Hohlzylinder 30b weisen die Innenflächen des Hohlzylinders 30b zwei nach innen gerichtete sich gegenüberliegende Längsstege 46 auf, deren radiale Lage (vgl. Linie B in Fig. 2) etwa 50 bis 60°, vorzugsweise 55° gegenüber der Schlitzöffnungsmittellinie (vgl. Linie A der Fig. 2) versetzt ist. Sie bewegen sich in zwei sich ebenfalls gegenüberliegenden Aussparungen 48 der äusseren Mantelfläche der Mitnehmerbuchse 30a. Diese Aussparungen 48 erstrecken sich jeweils etwa im Abstand von 45° von der Schlitzöffnungsmittellinie A über je etwa 90° radial, wie aus Fig. 2 gut zu ersehen. Die Geometrie ist so gewählt, dass im gezeigten Stadium des Aufschiebens, wo die Schlitze 36a, 36b, 36c übereinanderliegen, die eine Endstellung der Verrastungselemente 46, 48 vorliegt. Sie wird durch entsprechende Ventilsteuerung eingestellt, je nach Ausbildung des Werkzeugs ggf. durch langsamen Rückwärtslauf, wobei sich der Hohlzylinder 30b entgegengesetzt zum Uhrzeigersinn bewegt. Wird nun auf den eigentlichen «Vorwärtsgang» geschaltet, d.h. läuft nun der Hohlzylinder 30b mit eingestellter Kraft und Geschwindigkeit im Uhrzeigersinn um, so nehmen seine Längsstege 46 die durch Reibung etwas schwergängige, sich nicht von selbst verstellende Mitnehmerbuchse 30a erst nach Durchlaufen einer Strecke von etwa 60° (90° vermindert um die radiale Ausdehnung der Längsstege 46) mit. Dabei hat sich der Mantel des Hohlzylinders 30b längst über den Schlitz 36a der Mitnehmerbuchse 30a geschoben und diese verschlossen, bevor auf die eingeschobenen Verspannungsdrähte oder dergleichen 28 Kraft ausgeübt wird. Es liegt auf der Hand, dass eine solche Ausbildungsform in bezug auf Handhabung und Sicherheit ganz erhebliche Vorteile bietet. Selbstverständlich wären auch einfachere Ausführungsarten einer Verschliessung des Schlitzes 36a denkbar, z.B. eine von Hand vorzunehmende mechanische Verriegelung durch ein eingearbeitetes Riegelorgan vor dem Anlaufenlassen im Uhrzeigersinn. Hier geschieht die wichtige Verschliessung des Schlitzes jedoch sozusagen automatisch, was bei dieser Ausführungsform eine mehrteilige Ausgestaltung des Verzurr-Einsatzes 30 voraussetzt.

Je nach geometrischer Ausbildung des Schlitzes, insbesondere der Schlitzbreite wird die Lage der beschriebenen Verrastungsglieder 46, 48 sich etwas verschieden gestalten. Insbesondere kann auch die Zuordnung von Längssteg 46 und Aussparung 48 kinematisch umgekehrt werden. Es ist jedoch günstiger, die Ausnehmung in dem massiver gestalteten Teil, also der Mitnehmerbuchse 30a vorzusehen. Zu ergänzen ist noch, dass der Hohlzylinder 30b axial von den Flanschbunden 40 und radial von den Bohrungswänden 24b des Gehäuses geführt wird.

Fig. 3 zeigt schliesslich noch einen Schnitt durch den vorderen Teil des Gehäuses 12, 12a einschliesslich komplett eingesetztem Verzurr-Einsatz 30, wie er auch in den Fig. 1 und 2 gezeigt ist. Gleiche Teile sind mit gleichen Bezugsziffern bezeichnet. Der Schnitt entspricht der Linie A der Fig. 2. Dementsprechend sind die Teile in der rechten Seite in der Draufsicht, in der linken Seite im Schnitt dargestellt. Die Figur vermittelt neben typischen Abmessungen auch die Funktion des Distanzdrahtringes 44. Er ist endseitig mittels Sacklochbohrungen 42 im einen Flanschbund eingesteckt, läuft um die Mitnehmerbuchse 30a um und ist so nach oben gebogen, dass er den unteren Flansch von der Unterseite des Gehäuses 12 wegdrückt und dementsprechend den Bund 40 des oberen Flansches 30c auf die Oberseite 45 des Gehäuses 12a reibungsverstärkend anpresst.

Bezugszeichenliste

| 10 | Vorderende des Werkezeugs |
|---|---|
| 12 | Gehäuse |
| 12a | Gehäuseabdeckplatte |
| 14 | Treibrad |
| 16 | Zwischenräder |
| 18 | Aussenzahnkranz |
| 20 | Schrauben |
| 21 | Öffnungen |
| 22 | Gewindesacklöcher |
| 24, 24a | Bohrung im Gehäuse |
| 24b | Wand der Bohrung |
| 26, 26a | Vordere Öffnung im Gehäuse |
| 28 | Verspannungsdrähte |
| 30 | Verzurr-Einsatz |
| 30a | Mitnehmerbuchse |
| 30b | Hohlzylinder |
| 30c | Oberer Flansch |
| 31, 32 | Gewinde |
| 33 | Schrauben |
| 34 | Bohrungen |

| 35 | Gewindesacklöcher |
| 36a, b, c | Schlitze im Einsatz |
| 37 | Schlitz-Abrundung (axial) |
| 38 | Schlitz-Aufweitung (radial) |
| 40 | Flanschbund |
| 42 | Bohrungen |
| 44 | Distanzring |
| 45 | Gehäusewand |
| 46 | Längssteg |
| 48 | Aussparung |

46, 48 } Verrastungselemente

## Patentansprüche

1. Transportables Werkzeug zum Verzurren von Spanndrähten oder dgl., die z.B. der Befestigung oder Verspannung von Transportgut dienen, mit einem von einem Gehäuse (12, 12a) umgebenen Zahnradsatz, der einen im wesentlichen zylinderförmigen Einsatz (30) über dessen am Aussenmantel radial umlaufenden Zahnkranz (18) antreibt, wobei der Einsatz (30) einen mit einer Öffnung (26, 26a) im Gehäuse (12, 12a) korrespondierenden, sich über die ganze Höhe des Einsatzes (30) erstreckenden Schlitz (36) aufweist, und wobei Öffnung (26, 26a) und Schlitz (36) parallellaufen zur Achse der Zahnräder (14, 16), dadurch gekennzeichnet, dass der Zahnkranz (18) des Einsatzes (30) von einem im Werkzeuggehäuse (12, 12a) integrierten Motor antreibbar ist, und dass der Einsatz (30) aus mindestens zwei Teilen besteht, wobei eine Mitnehmerbuchse (30a) mit Schlitz (36a) konzentrisch von einem Hohlzylinder (30b) mit Aussenzahnkranz (18) und Mantelschlitz (36b) umfasst ist, der von Zwischenrädern (16) angetriebene Hohlzylinder (30b) die Mitnehmerbuchse (30a) mittels Verrastung mitnimmt, und die Verrastungselemente (46, 48) radial so verteilt sind, dass die Mitnahme erst erfolgt, wenn sich Hohlzylinder (30b) und Mitnehmerbuchse (30a) in bezug auf die korrespondierenden Schlitze (36a, 36b) um mehr als die Schlitzbreite gegeneinander verdreht haben.

2. Werkzeug nach Anspruch 1, dadurch gekennzeichnet, dass zur Verrastung von Mitnehmerbuchse (30a) und Hohlzylinder (30b) die Innenfläche des Hohlzylinders (30b) zwei nach innen weisende sich gegenüberliegende Längsstege (46) aufweist, deren radiale Lage (Linie B) etwa 50° bis 60° gegenüber der Schlitzöffnungsmittellinie (Linie A) versetzt ist und die sich in zwei sich gegenüberliegenden Aussparungen (48) der äusseren Mantelfläche der Mitnehmerbuchse (30a) begrenzt bewegen, die jeweils im Abstand von etwa 45° von der Schlitzöffnungsmittellinie (A) beginnen und sich über etwa je 90° radial erstrecken.

3. Werkzeug mit auswechselbar in das Zahnradgehäuse (12, 12a) einbringbarer Mitnehmerbuchse (30a) nach Anspruch 1 oder 2, dadurch gekennzeichnet, dass die Mitnehmerbuchse (30a) an ihrem Fuss und Kopf je einen Flansch aufweist zur axialen Führung des Hohlzylinders (30b) sowie zur Befestigung des kompletten Einsatzes (30) im Gehäuse (12, 12a), wobei wenigstens einer der Flansche (30c) lösbar an der Mitnehmerbuchse (30a) nach Durchstecken derselben durch die Bohrung (24, 24a) des Gehäuses (12, 12a) und den darin verbleibenden Hohlzylinder (30b) befestigbar, insbesondere aufschraubbar ist.

4. Werkzeug nach mindestens einem der vorangehenden Ansprüche, dadurch gekennzeichnet, dass im Bereich eines Flansches ein eine Reibung zwischen Flanschbund (40) und Gehäusewand (45) erzeugendes Element vorgesehen ist, vorzugsweise ein in Flanschbund-Bohrungen (42) endseitig eingebrachter umlaufender federnder Distanzring (44).

5. Werkzeug nach mindestens einem der vorangehenden Ansprüche, dadurch gekennzeichnet, dass der Schlitz (36a) der Mitnehmerbuchse (30a) sich in den beiden Flanschen (u.a. 30c) und dem Gehäuse (12, 12a) fortsetzt und zur Aufschiebeseite hin eine Aufweitung (38) aufweist.

6. Werkzeug nach mindestens einem der vorangehenden Ansprüche, dadurch gekennzeichnet, dass der Schlitz (36) am axialen Austritt des Einsatzes (30) eine Abrundung (37) von vorzugsweise etwa 2 mm Radius aufweist.

7. Werkzeug nach mindestens einem der vorangehenden Ansprüche, dadurch gekennzeichnet, dass der Hohlzylinder (30b) mittels eines Treibrades (14) über zwei in derselben Ebene liegende Zwischenräder (16) angetrieben wird, die jeweils mit dem Treibrad (14) und mit dem Zahnkranz (18) des Hohlzylinders (30b) in Eingriff stehen.

8. Werkzeug nach Anspruch 7, dadurch gekennzeichnet, dass der Zahnradsatz von einem samt zugehörigen Ventilen in das Gehäuse integrierten Pressluftmotor angetrieben ist.

## Claims

1. A transportable tool for clamping tie wires or the like which are used for example for fixing or lashing material to be transported, comprising a gear set which is enclosed by a casing (12, 12a) and which drives a substantially cylindrical insert (30) by way of its ring gear (18) which extends radially therearound on the outside surface, wherein the insert (30) has a slot (36) which corresponds to an opening (26, 26a) in the casing (12, 12a) and which extends over the entire height of the insert (30), and wherein the opening (26, 26a) and the slot (36) extend parallel to the axis of the gears (14, 16), characterised in that the ring gear (18) of the insert (30) is drivable by a motor which is integrated in the tool casing (12, 12a) and that the insert (30) comprises at least two parts, wherein an entrainment bush (30a) with slot (36a) is concentrically surrounded by a hollow cylinder (30b) having an external ring gear (18) and a slot (36b) in its peripheral portion, the hollow cylinder (30b) which is driven by intermediate gears (16) entrains the entrainment bush (30a) by way of locating means and the locating elements (46, 48) are radially distributed such that entrainment occurs only when the hollow cylinder (30b) and the entrainment bush (30a) have turned relative to each other, with respect to the corresponding slots (36a, 36b), by more than the slot width.

2. A tool according to claim 1 characterised in that for the purposes of locating the entrainment bush (30a) and the hollow cylinder (30b), the inside surface of the hollow cylinder (30b) has two inwardly facing, mutually oppositely disposed longitudinal bars (46) whose radial position (line B) is displaced at about 50° to 60° with respect to the centre line (line A) of the opening of the slot, and which move limitedly in two mutually oppositely disposed recesses (48) in the outer peripheral surface of the entrainment bush (30a), each of which recesses begins at a spacing of about 45° from the centre line (A) of the opening of the slot and extends radially over about 90°.

3. A tool having an entrainment bush (30a) which can be replaceably introduced into the gear casing (12, 12a), according to claim 1 or claim 2, characterised in that the entrainment bush (30a) has a respective flange at its base and at its top, for axial guidance of the hollow cylinder (30b) and for fixing of the complete insert (30) in the casing (12, 12a), wherein at least one of the flanges (30c) can be releasably secured to the entrainment bush (30a), in particular by being screwed thereon, after the entrainment bush has been passed through the bore (24, 24a) of the casing (12, 12a) and the hollow cylinder (30b) remaining therein.

4. A tool according to at least one of the preceding claims characterised in that disposed in the region of a flange is an element for producing friction between a flange shoulder (40) and a casing wall (45), preferably a circular resilient spacer ring (44) which is introduced into bores (42) in the flange shoulder at the ends thereof.

5. A tool according to at least one of the preceding claims characterised in that the slot (36a) in the entrainment bush (30a) is extended in the two flanges (inter alia 30c) and the casing (12, 12a) and has an enlargement portion (38) towards the push-on side.

6. A tool according to at least one of the preceding claims characterised in that at the axial exit of the insert (30) the slot (36) has a rounded configuration (37) preferably with a radius of about 2 mm.

7. A tool according to at least one of the preceding claims characterised in that the hollow cylinder (30b) is driven by means of a drive gear (14) by way of two intermediate gears (16) which are disposed in the same plane and which each engage with the drive gear (14) and with the ring gear (18) of the hollow cylinder (30b).

8. A tool according to claim 7 characterised in that the gear set is driven by a compressed air motor which is integrated into the casing together with associated valves.

**Revendications**

1. Outil transportable pour l'amarrage en les torsadant de fils d'arrimage ou analogues, qui servent par exemple à la fixation ou à l'arrimage d'objets transportés, comportant un jeu de pignons entouré par un carter (12,12a), qui entraîne un noyau (30) de forme générale cylindrique par l'intermédiaire d'une couronne dentée (18) l'entourant radialement sur sa périphérie extérieure, le noyau (30) comportant une fente (36) correspondant à un orifice (26, 26a) du carter (12, 12a) et s'étendant sur toute la hauteur du noyau (30), l'orifice (26, 26a) et la fente (36) s'étendant parallèlement à l'axe de pignons (14, 16), caractérisé en ce que la couronne dentée (18) du noyau (30) peut être entraînée par un moteur intégré au carter (12, 12a) de l'outil et en ce que le noyau (30) est constitué par au moins deux parties ou éléments, une douille d'entraînement (30a) munie d'une fente (36a) étant entourée concentriquement par un cylindre creux (30b) muni d'une couronne dentée extérieure (18) et d'une fente périphérique (36b), le cylindre creux (30b), entraîné par des pignons intermédiaires (16), entraînant par un système d'encrantement la douille d'entraînement (30a), les éléments d'encrantement (46, 48) étant répartis radialement de façon telle que l'entraînement ait lieu seulement quand le cylindre creux (30b) et la douille d'entraînement (30a) ont tourné l'un par rapport à l'autre, relativement à la fente correspondante (36a, 36b), d'une distance supérieure à la largeur de la fente.

2. Outil suivant la revendication 1, caractérisé en ce que, pour l'encrantement de la douille d'entraînement (30a) et du cylindre creux (30b), la surface intérieure du cylindre creux (30b) comporte deux nervures longitudinales opposées (46) orientées vers l'intérieur, dont la position radiale (ligne B) est décalée de 50 à 60° environ par rapport à l'axe médian de l'embouchure de la fente (ligne A) et qui se déplacent de façon limitée dans deux cavités opposées (48) de la périphérie extérieure de la douille d'entraînement (30a), qui commencent chaque fois d'à une distance d'environ 45° de l'axe médian de l'embouchure de la fente (A) et qui s'étendent radialement chacune sur 90° environ.

3. Outil avec douille d'entraînement (30a) pouvant être introduite de façon interchangeable dans le carter à pignons (12, 12a) caractérisé en ce que la douille d'entraînement (30a) comporte chaque fois à sa base et à son sommet une bride pour le guidage axial du cylindre creux (30b), ainsi que pour la fixation de l'ensemble du noyau (30) dans le carter (12, 12a), l'une au moins des brides (30c) pouvant être fixée de façon amovible, en particulier par vissage, sur la douille d'entraînement (30a) après insertion de celle-ci à travers le perçage (24, 24a) du carter (12, 12a), et le cylindre creux (30b) demeurant dans celui-ci.

4. Outil suivant l'une au moins des revendications précédentes, caractérisé en ce qu'il est prévu, au voisinage d'une bride, un élément engendrant une friction entre une collerette (40) de la bride et une paroi (45) du carter, de préférence une bague d'entretoisement élastique circulaire (44) engagée par ses extrémités dans des perçages (42) de la collerette de la bride.

5. Outil suivant l'une au moins des revendications précédentes, caractérisé en ce que la fente (36a) de la douille d'entraînement (30a) se prolonge dans les deux brides (entre autres 30c) et dans le carter (12, 12a) et présente un élargissement (38) en direction du côté d'engagement.

6. Outil suivant l'une au moins des revendications précédentes, caractérisé en ce que la fente (36) présente, au débouché axial du noyau (30), un arrondi (37) ayant un rayon de préférence de 2 mm environ.

7. Outil suivant l'une au moins des revendications précédentes, caractérisé en ce que le cylindre creux (30b) est entraîné au moyen d'une roue motrice (14) par l'intermédiaire de deux pignons intermédiaires (16) disposés dans le même plan, qui sont chaque fois en prise avec la roue motrice (14) et avec la couronne dentée (18) du cylindre creux (30b).

8. Outil suivant la revendication 7, caractérisé en ce que le jeu de pignons est entraîné par un moteur à air comprimé intégré au carter avec les valves conjuguées.

FIG.1

0 092 596

FIG. 2

FIG. 3